# EUROPÄISCHE PATENTSCHRIFT

(11) **EP 2 823 994 B1**
(45) Veröffentlichungstag und Bekanntmachung des Hinweises auf die Patenterteilung: **21.09.2016**
(21) Anmeldenummer: 13175945.8
(22) Anmeldetag: 10.07.2013
(51) Int. Cl.: B60P 1/16, B62D 33/023, B62D 33/027, B60J 5/04

(54) **Transportfahrzeug für Stückgut**
Transport vehicle for piece goods
Véhicule de transport pour matériaux en vrac

(43) Veröffentlichungstag der Anmeldung: 14.01.2015
(60) Teilanmeldung: 14188662.2
(73) Patentinhaber: Fliegl jun., Josef, 84453 Mühldorf am Inn (DE)
(72) Erfinder: Fliegl sen., Josef, 84556 Kastl (DE)
(74) Vertreter: Tetzner, Michael

(56) Entgegenhaltungen:
- EP-A1- 1 247 675
- EP-A1- 2 383 206
- DE-A1-102008 049 135
- JP-A- 2000 052 776
- US-A1- 2003 127 876

## Beschreibung

Die Erfindung betrifft ein Transportfahrzeug für Stückgut, insbesondere in Form von gepressten Ballen, wie Heu-, Stroh- oder Silageballen.

Aus der DE 20 2007 019 318 U1 ist ein Transportwagen für gepresste Ballen aus Stroh oder Silage bekannt, bei dem eine Ladeplatteform durch Längs- sowie Querseitenteile begrenzt wird. Zum Be- und Entladen des Transportwagens können die Längsseitenwände in eine bodennahe Öffnungsstellung abgesenkt werden. Die absenkbaren Längsseitenwände sind relativ niedrig ausgeführt, sodass sie in der Öffnungsstellung bis unter das Niveau der Ladeplatteform abgesenkt werden können. In der Transportstellung verbleibt jedoch zwischen der Unterkante der Längsseitenwände und der Ladeplattform ein offener Bereich der wahlweise mit zusätzlichen, klappbaren Bordwänden oder Sicherungselemente, insbesondere in Form von flexiblen Spannteilen wie Planen oder Seile oder Netze gesichert wird.

Ein Transportfahrzeug gemäß dem Oberbegriff des Anspruchs 1 ist beispielsweise aus der US 2003/0127876 A1 bekannt. Aus der EP 1 247 675 A1, der EP 2 383 206 A1 und der DE 10 2008 049 135 A1 sind weitere Transportfahrzeuge mit Längsseiteriteilen bekannt, die in der Öffriungsstellung nach oben geschwenkt werden.

Der Erfindung liegt nun die Aufgabe zugrunde, ein neues Konzept für ein Transportfahrzeug für Stückgut anzugeben, das sich insbesondere durch eine einfache und sichere Handhabung auszeichnet.

Erfindungsgemäß wird diese Aufgabe durch die Merkmale des Anspruches 1 gelöst. Beim erfindungsgemäßen Transportfahrzeug für Stückgut, insbesondere in Form von gepressten Ballen, wird eine Ladeplattform durch vordere und hintere Stirnwandelemente sowie durch Längsseitenteile begrenzt, wobei die Längsseitenteile mit einem Öffnungsmechanismus zur Verstellung zwischen einer Transportstellung und einer Öffnungsstellung zum Be- und Entladen der Ladeplattform zusammenwirken. Die Längsseitenteile sind dabei derart am Öffnungsmechanismus angelenkt, dass die Längsseitenteile in der Öffnungsstellung nach oben geschwenkt sind. Zur Einstellung der Beladebreite ist ferner ein Verstellmechanismus zur Verschiebung der Längsseitenteile quer zur Fahrzeuglängsachse vorgesehen.

Auf diese Weise ist die Höhe der Längsseitenteile nicht auf die Höhe der Ladeplattform begrenzt und kann so ausgebildet werden, dass der gesamte Transportraum seitlich durch die Längsseitenteile gesichert werden kann. Es sind daher keine zusätzlichen, klappbaren Ladebordwände oder andere Sicherungselemente erforderlich.

Weitere Ausgestaltungen der Erfindung sind Gegenstand der Unteransprüche.

Der Öffnungsmechanismus weist vorzugsweise jeweils eine in Längsrichtung des Transportfahrzeugs vordere und hintere Tragkorisole auf, an denen die beiden Längsseitenteile jeweils schwenkbar angelenkt sind. Der Öffnungsmechanismus kann weiterhin wenigstens eine erste und eine zweite Hubeinrichtung aufweisen, wobei die erste Hubeinrichtung zum Schwenken des einen Längsseitenteils und die zweite Hubeinrichtung zum Schwenken des anderen Längsseitenteils vorgesehen ist. Gemäß einer weiteren Ausgestaltung der Erfindung umfasst der Öffnungsmechanismus ferner eine Hubeinrichtung zum Anheben und Absenken der Seitenteile zwischen einer Verriegelungsstellung und einer Freigabestellung auf, wobei die Hubeinrichtung vorzugsweise die beiden Tragkonsolen vertikal zur Ladeplattform zwischen der Verriegelungsstellung und der Freigabestellung verschiebt. Die erste und zweite Hubeinrichtung 12.3 kann wahlweise durch elektrisch, pneumatisch oder hydraulisch betätigbare Hubzylinder oder durch einen Zahnstangen-, Seilzug- oder Kettenantrieb gebildet werden.

Die Längsseitenteile sind dabei mit Verriegelungselementen versehen, die in der Verriegelungsstellung mit Verriegelungskonsolen in Eingriff stehen und ein Schwenken der Längsseitenteile verhindern. Hierbei wird zuverlässig verhindert, dass die Längsseitenteile während der Fahrt durch den Druck der Ladung unbeabsichtigt aufschwenken und Ladung verloren wird.

Die Längsseitenteile sind gemäß einer Ausgestaltung der Erfindung im Bereich ihrer Anlenkung im Querschnitt L-förmig ausgebildet und weisen einen kürzeren und einen längeren Schenkel auf. Weiterhin beträgt der Abstand der Schwenkachsen der Längsseitenteile quer zur Fahrzeuglängsachse weniger als 30%, vorzugsweise weniger als 40%, des Abstandes des Längsseitenteile in der Transportstellung.

Die Längsseitenteile können beispielsweise eine Gittermatte, ein Netz oder ein Lochblech umfassen oder als Streckmetallgitter oder durch Sprossen und Holme gebildet werden. Weiterhin ist es denkbar, dass eine die Ladeplattform seitlich und oben abdeckende Plane vorgesehen ist. Damit die Plane beim Auf und Zuschwenken der Längsseitenteile nicht eingeklemmt wird, ist gemäß einher besonderen Ausgestaltung der Erfindung eine Einrichtung zum Straffen der Plane vorgesehen. Diese kann beispielsweise durch einen mit der Plane in Kontakt kommenden Schwenkbügel gebildet werden.

Mit dem Verstellmechanismus kann die Beladebreite an das zu transportierende Gut oder die im Straßenverkehr erlaubten Maße angepasst werden. Dies kann beispielsweise dadurch erreicht werden, dass der kürzere Schenkel der Längsseitenteile zur Einstellung der Beladebreite als Teleskoparm ausgebildet ist, der vorzugsweise durch einen elektrisch, hydraulisch oder pneumatisch aktivierbaren Aktuator verstellbar ist. Natürlich ist auch eine mechanische Einstellung denkbar. Eine hydraulische oder pneumatische Verstellung hat jedoch den Vorteil, dass die Beladebreite sehr unkompliziert und schnell angepasst werden kann. Die Praxis zeigt, dass die gepressten Ballen oftmals nicht exakt übereinander angeordnet werden können. Eine pneumatische oder hydraulische Verstellung ermöglicht jedoch eine schnelle Anpassung. Auch die Verriegelungseinrichtung ist so auszulegen, dass sie sich an die unterschiedlichen Beladebreiten anpassen lässt, um dadurch eine sichere Verriegelung zu gewährleisten.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des Transportwagens,
- Fig. 2: eine Stirnansicht des Transportwagens gemäß Fig. 1,
- Fig. 3: eine Ansicht des Details A der Fig. 2,
- Fig. 4: eine Ansicht des Details B der Fig. 2,
- Fig. 5: eine dreidimensionale Darstellung eines Transportwagens gemäß einem weiteren Ausführungsbeispiel und
- Fig. 6: eine Stirnansicht des Transportwagens gemäß Fig. 5.

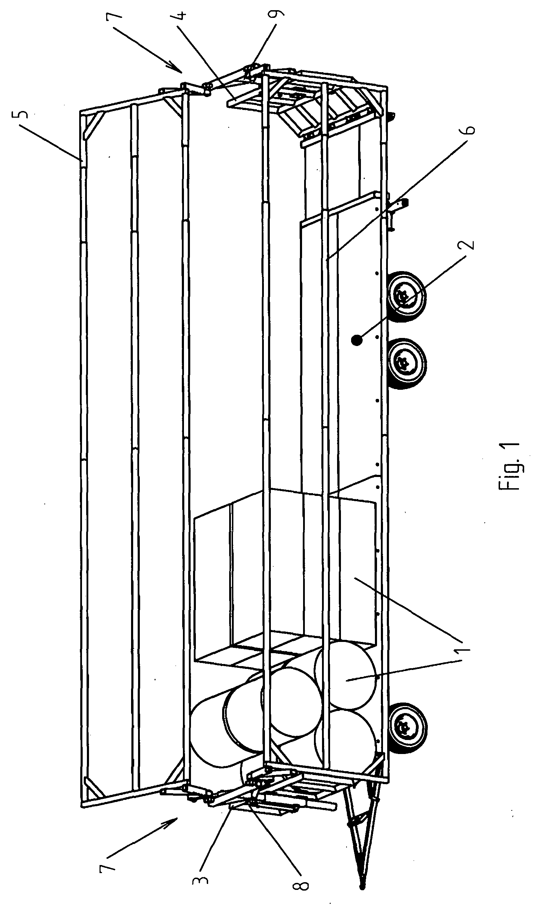

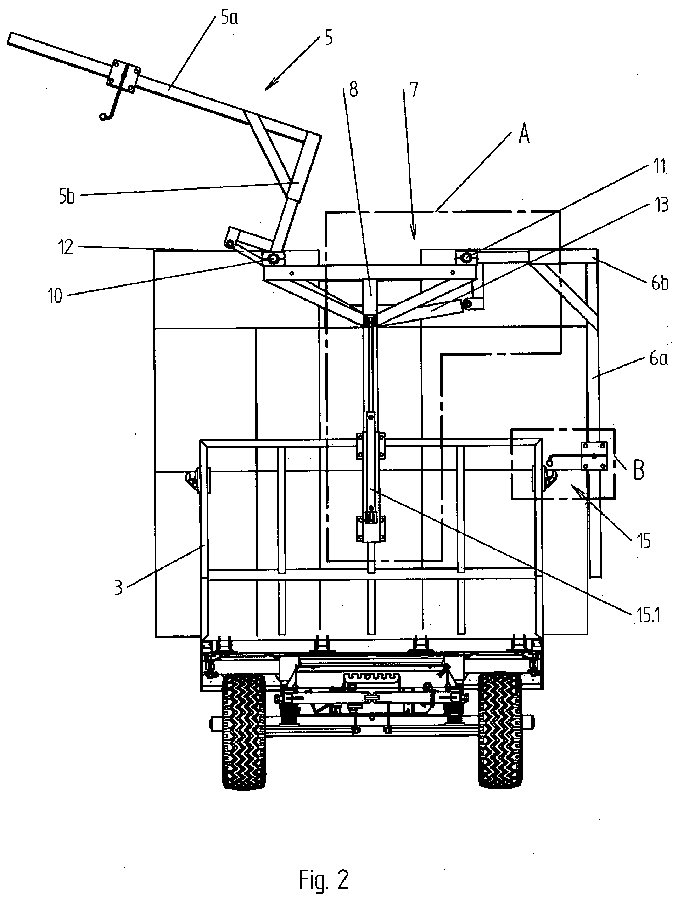

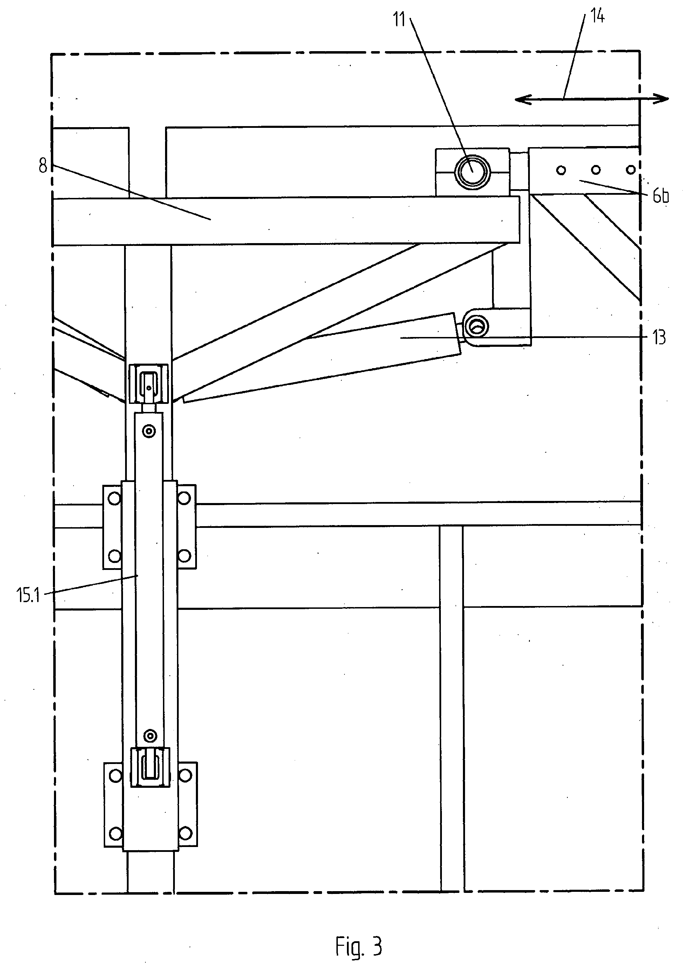

Das in Fig. 1 dargestellte Transportfahrzeug für Stückgut 1, insbesondere in Form von gepressten Ballen, weist eine Ladeplattform 2 auf, die durch vordere und hintere Stirnwandelemente 3, 4 sowie durch zwei Längsseitenteile 5, 6 begrenzt wird. Die beiden Längsseitenteile 5, 6 wirken mit einem Öffnungsmechanismus 7 zur Verstellung zwischen einer Transportstellung (Längsseitenteil 6) und einer. Öffnungsstellung (Längsseitenteil 5) zusammen. Wie aus den Fig. 1 und 2 ersichtlich ist, sind die Längsseitenteile 5, 6 derart am Öffnungsmechanismus 7 angelenkt, dass die Längsseitenteile in der Öffnungsstellung nach oben geschwenkt sind, sodass die Ladeplattform 2 in dieser Stellung be- und entladen werden kann. Der Öffnungsmechanismus 7 ist außerdem in Fig. 3 vergrößert dargestellt und umfasst jeweils eine in Längsrichtung des Transportfahrzeugs vordere und eine hintere Tragkonsole 8, 9, an denen die Längsseitenteile über Schwenkachsen 10, 11 schwenkbar angelenkt sind. Der Öffnungsmechanismus 7 umfasst ferner eine erste und eine zweite Hubeinrichtung 12, 13, wobei die erste Hubeinrichtung 12 zum Schwenken des Längsteils 5 und die zweite Hubeinrichtung 13 zum Schwenken des Längsseitenteils 6 vorgesehen ist. Die Hubeinrichtungen werden vorzugsweise durch einen hydraulisch betätigbaren Hubzylinder gebildet.

Die Längsseitenteile bilden einen sich über die gesamte Länge der Ladeplattform und im Wesentlichen über die gesamte Ladehöhe erstreckenden Rahmen, der wahlweise mit einer Gittermatte, einem Netz, einem Lochblech, oder mit Sprossen und Holmen ausgestattet ist. Auch ein Streckmetallgitter ist denkbar. Im Bereich der Anlenkung der Längsseitenteile an die Tragkonsolen sind die Längsseitenteile L-förmig ausgebildet und weisen einen längeren Schenkel 5a bzw. 6a und einen kürzeren Schenkel 5b bzw. 6b auf. Die längeren Schenkel 5a bzw. 6a bilden die vordere und hintere Begrenzung der Längsseitenteile. Die kürzeren Schenkel 5b bzw. 6b sind an den Tragkonsolen angelenkt. In der Transportstellung gemäß der rechten Hälfte der Fig. 2 ist der längere Schenkel im Wesentlichen vertikal und der kürzere Schenkel im Wesentlichen horizontal ausgerichtet. Der Abstand der beiden Schwenkachsen 10, 11 quer zur Längsmittelachse des Transportwagens ist fest vorgegeben und beträgt vorzugsweise weniger als 30%, vorzugsweise weniger als 40%, des Abstandes der Längsseitenteile 5, 6 in der Transportstellung. Um den Abstand der Längsseitenteile 5, 6 in der Transportstellung an das Ladegut und/oder die im Straßenverkehr zulässigen Maße anpassen zu können, sind die kürzeren Schenkel 5b bzw. 6b der Längsseitenteile 5, 6 als Teleskoparme ausgebildet, die entweder mechanisch, elektrisch, hydraulisch oder pneumatisch längs des Doppelpfeils 14 (Fig. 3) verstellbar sind. Hierzu kann insbesondere eine nicht näher dargestellter hydraulisch oder pneumatisch aktivierter Aktuator vorgesehen werden. Fig. 3 zeigt die mechanische Lösung, bei der die Stellung der Teleskoparme mittels Steckbolzen gesichert werden.

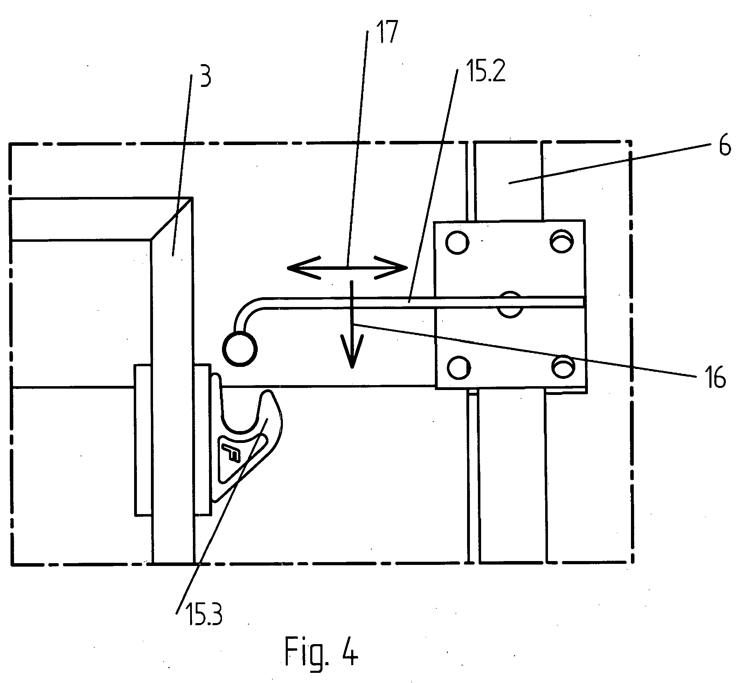

Damit die Längsseitenteile während der Fahrt nicht unbeabsichtigt nach oben schwenken ist eine Verriegelungseinrichtung 15 vorgesehen, die eine Hubeinrichtung 15.1 zum Anheben und Absenken der Längsseitenteile 5, 6 zwischen einer Verriegelungsstellung und einer Freigabestellung aufweist. Die Hubeinrichtung 15.1 ermöglicht eine Verschiebung der Tragkonsolen 8, 9 vertikal zur Ladeplattform 2. Weiterhin sind mit dem Längsseitenteilen 5, 6 in Verbindung stehende Verriegelungselemente 15.2 vorgesehen, die mit Verriegelungskonsolen 15.3 an den Stirnteilen 3, 4in Eingriff kommen und ein Schwenken der Längsteile verhindern. Die Freigabestellung des Längsseitenteils 6 ist in Fig. 2 und 4 näher dargestellt. Indem die Hubeinrichtung 15.1 die Tragkonsolen 8, 9 absenkt bewegt sich das Verriegelungselement 15.2 in Richtung des Pfeils 16 (Fig. 4) nach unten und kommt mit der Verriegelungskonsole 15.3 in Eingriff. In der sich dann ergebenden, jedoch nicht näher dargestellten, Verriegelungsstellung ist ein Verschwenken des Längsseitenteils nicht mehr möglich, sodass die Ladung zuverlässig gesichert ist. Damit der Verriegelungsmechanismus auch bei einer geänderten Beladebreite funktioniert, sind entweder das Verriegelungselement 15.2 und/oder die Vernegelungskonsole 15.3 am Längsseitenteil 5.6 oder an der vorderen oder hinteren Stirnwand 3, 4 längs des Doppelpfeils 17 verstellbar angebracht.

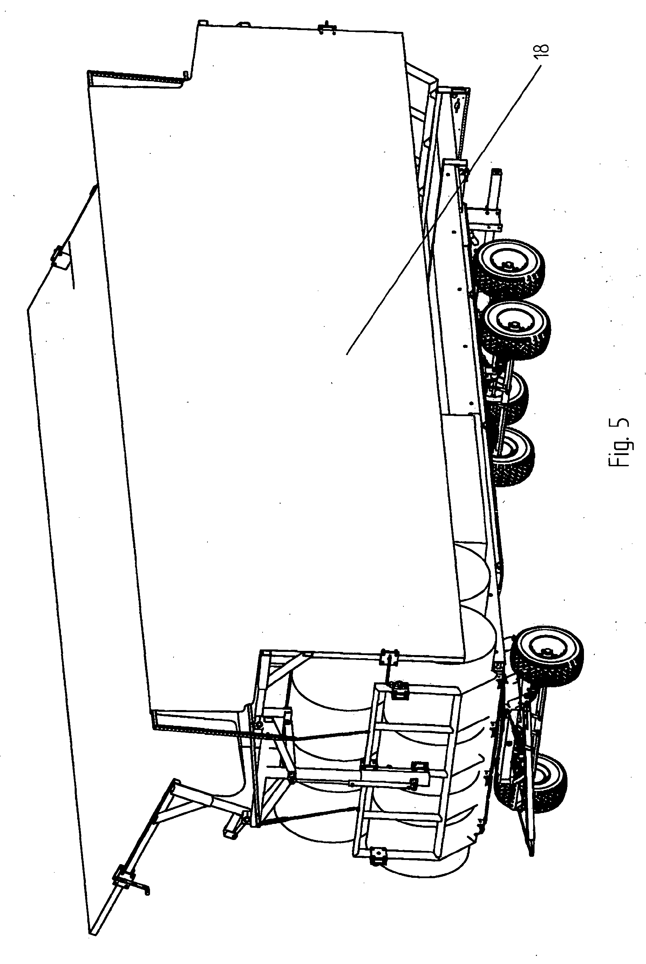

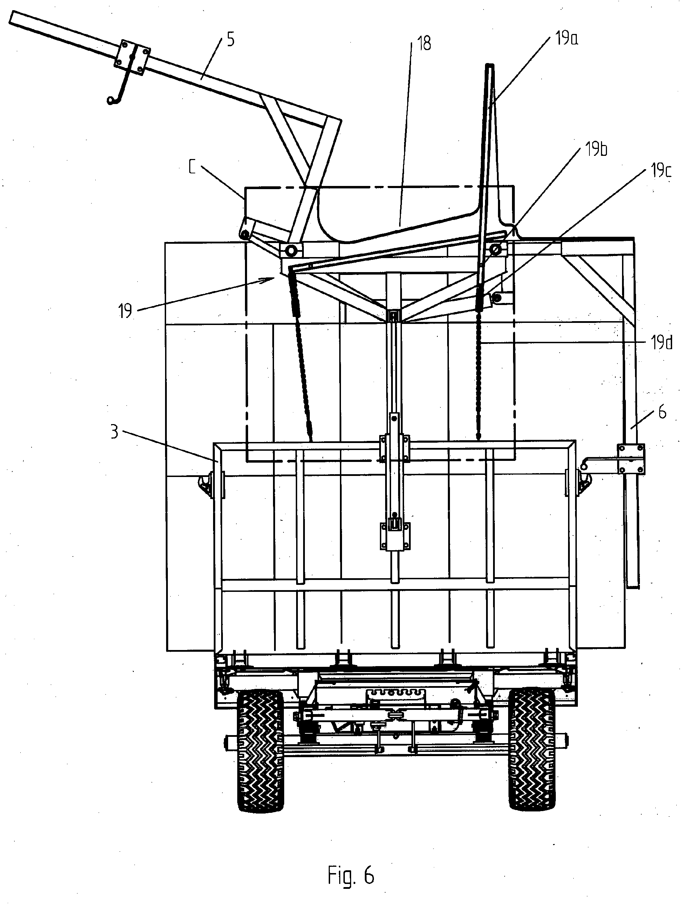

In den Fig. 5 und 6 wird eine weitere, optionale Ausgestaltung offenbart, bei der die Ladeplattform seitlich im Bereich der Längsseitenteile 5, 6 und oben mit einer Plane 18 abgedeckt ist. Damit die Plane beim Verschwenken der Längsseitenteile nicht eingeklemmt wird und Schaden nimmt, ist eine Einrichtung 19 zum Straffen der Plane vorgesehen, die einen Schwenkbügel 19a umfasst, der als doppelarmiger Hebel um eine Schwenkachse 19b verschwenkbar ist. Der eine Arm kommt dabei mit der Plane 18 in Kontakt und der andere Arm ist an seinem Ende über ein Federelement 19c und eine Kette oder einen Seilzug 19d so vorgespannt, dass der Bügel die Plane nach oben dürcken will, wie das in der rechten Hälfte der Fig. 6 dargestellt ist. Durch das Absenken der Längsseitenteile 5 wird der Schwenkbügel 19a entgegen der Kraft des Federelements 19c in eine mehr oder weniger horizontale Stellung gebracht, wie das in der linken Hälfte der Fig. 6 für die zweite Einrichtung 19 zum Straffen der Plane dargestellt ist.

## Patentansprüche

1. Transportfahrzeug für Stückgut, insbesondere in Form von gepressten Ballen, mit einer Ladeplattform (2), die durch vordere und hintere Stirnwandelemente (3, 4) sowie durch Längsseitenteile (5, 6) begrenzt wird, wobei die Längsseitenteile (5, 6) mit einem Öffnungsmechanismus zur Verstellung zwischen einer Transportstellung und einer Öffnungsstellung zum Be- und Entladen der Ladeplattform (2) zusammenwirken, wobei die Längsseitenteile (5, 6) derart am Öffnungsmechanismus (7) angelenkt sind, dass die Längsseitenteile (5, 6) in der Öffnungsstellung nach oben geschwenkt sind,
**dadurch gekennzeichnet, dass** zur Einstellung der Beladebreite ein Verstellmechänismus zur Verschiebung der Längsseitenteile (5, 6) quer zur Fahrzeuglängsachse vorgesehen ist.

2. Transportfahrzeug nach Anspruch 1, **dadurch gekennzeichnet, dass** der Öffnungsmechanismus (7) jeweils eine in Längsrichtung des Transportfahrzeugs vordere und eine hintere Tragkonsole (8, 9) umfasst, an denen die beiden Längsseitenteile (5, 6) jeweils schwenkbar angelenkt sind.

3. Transportfahrzeug nach einem oder mehreren der vorhergehenden Ansprüche,
**dadurch gekennzeichnet, dass** der Öffnungsmechanismus (7) wenigstens eine erste und eine zweite Hubeinrichtung (12, 13) aufweist, wobei die erste Hubeinrichtung (12) zum Schwenken dessen einen Längsseitenteils (5) und die zweite Hubeinrichtung (13) zum Schwenken des anderen Längsseitenteils (6) vorgesehen ist.

4. Transportfahrzeug nach einem oder mehreren der vorhergehenden Ansprüche,
**dadurch gekennzeichnet, dass** ferner ein Verriegelungsmechanismus (15) mit einer Hubeinrichtung (15.1) zum Anheben und Absenken der Längsseitenteile (5, 6) zwischen einer Verriegelungsstellung und einer Freigabestellung vorgesehen ist.

5. Transportfahrzeug nach Anspruch 2 und 5, **dadurch gekennzeichnet, dass** die Hubeinrichtung (15.1) die beiden Tragkonsolen (8, 9) vertikal zur Ladeplattform (2) zwischen der Verriegelungsstellung und der Freigabestellung verschiebt.

6. Transportfahrzeug nach Anspruch 4 oder 5, **dadurch gekennzeichnet, dass** der Verriegelungsmechanismus (15) mit den Längsseitenteilen (5, 6) in Verbindung stehende Verriegelungselemente (15.2) aufweist, die in der Verriegelungsstellung mit Verriegelungskonsolen (15.3) in Eingriff stehen und ein Schenken der Längsseitenteile (5, 6) verhindern.

7. Transportfahrzeug nach Anspruch 6, **dadurch gekennzeichnet, dass** die Verriegelungskonsolen (15.3) an den vorderen und hinteren Stirnwandelementen (3, 4) angebracht sind.

8. Transportfahrzeug nach einem oder mehreren der vorhergehenden Ansprüche,
**dadurch gekennzeichnet, dass** die Längsseitenteile (5, 6) im Bereich ihrer Anlenkung im Querschnitt L-förmig ausgebildet sind und einen kürzeren und einen längeren Schenkel (5a, 5b, 6a, 6b) aufweisen.

9. Transportfahrzeug nach einem oder mehreren der vorhergehenden Ansprüche,
**dadurch gekennzeichnet, dass** der Abstand der Schwenkachsen (10, 11) der Längsseitenteile (5, 6) quer zur Fahrzeuglängsachse weniger als 30%, vorzugsweise weniger als 40% des Abstandes der Längsseitenteile (5, 6) in der Transportstellung beträgt.

10. Transportfahrzeug nach einem oder mehreren der vorhergehenden Ansprüche,
**dadurch gekennzeichnet, dass** das eine die Ladeplattform (2) seitlich und oben abdeckende Plane (18) vorgesehen ist.

11. Transportfahrzeug nach Anspruch 10, **dadurch gekennzeichnet, dass** eine Einrichtung (19) zum Straffen der Plane (18) vorgesehen ist, wenn sich wenigstens eines der beiden Längsseitenteile (5, 6) in der Öffnungsstellung befindet.

12. Transportfahrzeug nach Anspruch 11, **dadurch gekennzeichnet, dass** die Einrichtung (19) zum Straffen der Plane einen mit der Plane (18) in Kontakt kommenden Schwenkbügel (19a) aufweist.

13. Transportfahrzeug nach Anspruch 1 und 8, **dadurch gekennzeichnet, dass** der kürzere Schenkel (5b, 6b) zur Einstellung der Beladebreite als Teleskoparm ausgebildet ist.

14. Transportfahrzeug nach Anspruch 13, **dadurch gekennzeichnet, dass** der Verstellmechanismus einen hydraulisch oder pneumatisch aktivierbaren Aktuator zur Verstellung des Teleskoparms umfasst.

## Claims

1. Transport vehicle for piece goods, in particular in the form of compressed bales, comprising a cargo platform (2) that is delimited by front and rear bulkhead elements (3, 4) and by longitudinal side parts (5, 6), the longitudinal side parts (5, 6) cooperating with an opening mechanism for movement between a transport position and an open position for loading and unloading the cargo platform (2), the longitudinal side parts (5, 6) being hinged to the opening mechanism (7) such that the longitudinal side parts (5, 6) are pivoted upwards in the open position, **characterised in that**, to adjust the loading width, an adjustment mechanism is provided for moving the longitudinal side parts (5, 6) transversely to the longitudinal axis of the vehicle.

2. Transport vehicle according to claim 1, **characterised in that** the opening mechanism (7) comprises in each case a front and a rear support bracket (8, 9) in the longitudinal direction of the transport vehicle, to which brackets the two longitudinal side parts (5, 6) are each pivotally hinged.

3. Transport vehicle according to one or more of the preceding claims, **characterised in that** the opening mechanism (7) comprises at least one first and one second lifting device (12, 13), the first lifting device (12) being provided for pivoting one longitudinal side part (5) and the second lifting device (13) being provided for pivoting the other longitudinal side part (6).

4. Transport vehicle according to one or more of the preceding claims, **characterised in that** a locking mechanism (15) is further provided, comprising a lifting device (15.1) for raising and lowering the longitudinal side parts (5, 6) between a locking position and a release position.

5. Transport vehicle according to claims 2 and 5, **characterised in that** the lifting device (15.1) moves the two support brackets (8, 9) vertically with respect to the cargo platform (2), between the locking position and the release position.

6. Transport vehicle according to either claim 4 or claim 5, **characterised in that** the locking mechanism (15) comprises locking elements (15.2) that are connected to the longitudinal side parts (5, 6) and that engage, in the locking position, with locking brackets (15.3) and prevent the longitudinal side parts (5, 6) from pivoting.

7. Transport vehicle according to claim 6, **characterised in that** the locking brackets (15.3) are attached to the front and rear bulkhead elements (3, 4).

8. Transport vehicle according to one or more of the preceding claims, **characterised in that** the longitudinal side parts (5, 6) have an L-shaped cross section in the region of the hinge thereof and comprise one shorter and one longer leg (5a, 5b, 6a, 6b).

9. Transport vehicle according to one or more of the preceding claims, **characterised in that** the spacing of the swivel pins (10, 11) of the longitudinal side parts (5, 6) transversely to the longitudinal axis of the vehicle is less than 30 %, preferably less than 40 %, of the spacing of the longitudinal side parts (5, 6) in the transport position.

10. Transport vehicle according to one or more of the preceding claims, **characterised in that** a tarpaulin (18) is provided that covers the cargo platform (2) at the sides and at the top.

11. Transport vehicle according to claim 10, **characterised in that** a device (19) for tightening the tarpaulin (18) is provided when at least one of the two longitudinal side parts (5, 6) is in the open position.

12. Transport vehicle according to claim 11, **characterised in that** the device (19) for tightening the tarpaulin comprises a swivel stay (19a) that comes into contact with the tarpaulin (18).

13. Transport vehicle according to claims 1 and 8, **characterised in that**, in order to adjust the loading width, the shorter leg (5b, 6b) is formed as a telescopic arm.

14. Transport vehicle according to claim 13, **characterised in that** the adjustment mechanism comprise a hydraulically or pneumatically activatable actuator for adjusting the telescopic arm.

## Revendications

1. Véhicule de transport de marchandises, en particulier en forme de balles pressées, avec une plateforme de chargement (2), qui est limitée par des éléments de parois frontales avant et arrière (3, 4) ainsi que par des pièces latérales, longitudinales (5, 6), sachant que les pièces latérales, longitudinales (5, 6) coopèrent avec un mécanisme d'ouverture, destiné au réglage entre une position de transport et une position d'ouverture pour le chargement et le déchargement de la plateforme de chargement (2), les pièces latérales, longitudinales (5, 6) étant articulées sur le mécanisme d'ouverture (7) de telle manière que les pièces latérales, longitudinales (5, 6) se trouvent pivotées vers le haut dans la position d'ouverture,
**caractérisé en ce que,** pour le réglage de la largeur de chargement, un mécanisme de réglage est prévu pour déplacer les pièces latérales, longitudinales (5, 6) transversalement par rapport à l'axe longitudinal du véhicule.

2. Véhicule de transport selon la revendication 1,
**caractérisé en ce que** le mécanisme d'ouverture (7) est respectivement doté, dans la direction longitudinale du véhicule de transport, d'une console de support avant et d'une console de support arrière (8, 9) sur lesquelles les deux pièces latérales, longitudinales (5, 6) sont articulées en pivotement.

3. Véhicule de transport selon l'une ou plusieurs des revendications précédentes,
**caractérisé en ce que** le mécanisme d'ouverture (7) est doté d'au moins une première et d'une deuxième installation de levage (12, 13), sachant que la première installation de levage (12) est prévue pour le pivotement de l'une (5) des pièces latérales, longitudinales et l'autre installation de levage (13) est prévue pour le pivotement de l'autre pièce latérale, longitudinales (6).

4. Véhicule de transport selon l'une ou plusieurs des revendications précédentes,
**caractérisé en ce que**, de plus, un mécanisme de verrouillage (15) est prévu, lequel est doté d'un dispositif de levage (15.1), qui est destiné à soulever et à abaisser les pièces latérales, longitudinales (5, 6) entre une position de verrouillage et une position de libération.

5. Véhicule de transport selon les revendications 2 et 5,
**caractérisé en ce que** le dispositif de levage (15.1) déplace les deux consoles de support (8, 9), perpendiculairement par rapport à la plateforme de chargement (2), entre la position de verrouillage et la position de libération.

6. Véhicule de transport selon revendication 4 ou 5,
**caractérisé en ce que** le mécanisme de verrouillage (15) est doté d'éléments de verrouillage (15.2), reliés aux pièces latérales, longitudinales (5, 6), qui, dans la position de verrouillage, sont en prise avec des consoles de verrouillage (15.3) et empêchent un pivotement des pièces latérales, longitudinales (5, 6).

7. Véhicule de transport selon la revendication 6,
**caractérisé en ce que** les consoles de verrouillage (15.3) sont montées sur les éléments de parois frontales avant et arrière (3, 4).

8. Véhicule de transport selon l'une ou plusieurs des revendications précédentes,
**caractérisé en ce que** les pièces latérales, longitudinales (5, 6) sont dotées d'une section transversale en forme de L, dans la région de leur articulation, et présentent une branche plus courte et une branche plus longue (5a, 5b, 6a, 6b).

9. Véhicule de transport selon l'une ou plusieurs des revendications précédentes,
**caractérisé en ce que** la distance existant transversalement entre les axes de pivotement (10, 11) des pièces latérales longitudinales (5, 6) et l'axe longitudinal du véhicule représente moins de 30 %, de préférence moins de 40 % de la distance des pièces latérales, longitudinales (5, 6) en position de transport.

10. Véhicule de transport selon l'une ou plusieurs des revendications précédentes,
**caractérisé en ce qu'**est prévue une bâche (18) qui couvre la plateforme de chargement (2) sur les côtés et en haut.

11. Véhicule de transport selon la revendication 10,
**caractérisé en ce qu'**un dispositif (19) est prévu pour tendre la bâche (18) quand au moins l'une des pièces latérales, longitudinales (5, 6) se trouve en position d'ouverture.

12. Véhicule de transport selon la revendication 11,
**caractérisé en ce que** le dispositif (19), destiné à tendre la bâche, est doté d'un arceau pivotant (19a), qui entre en contact avec la bâche (18).

13. Véhicule de transport selon les revendications 1 et 8,
**caractérisé en ce que** la branche la plus courte (5b, 6b) est conçue en tant que bras télescopique pour le réglage de la largeur de chargement.

14. Véhicule de transport selon la revendication 13,
**caractérisé en ce que** le mécanisme de réglage comprend un actionneur qui est activé de manière hydraulique ou pneumatique pour le réglage du bras télescopique.
